# EUROPEAN PATENT APPLICATION

(11) **EP 2 868 453 A1**
(43) Date of publication of application: **06.05.2015**
(21) Application number: 12746138.2
(22) Date of filing: 28.06.2012
(51) Int. Cl.: B29B 17/00, C08L 19/00, C08J 3/00

(54) **COMPOSITE MATERIAL OF RUBBER GRANULATES FROM RECYCLED USED TIRES IN A POLYMER MATRIX**

(71) Applicant: Biosafe - Indústria De Reciclagens, S.A., 3881-902 Ovar (PT)
(72) Inventor: MARTINS DE CARVALHO, José Manuel, P-3740-251 Sever do Vouga (PT); PEREIRA MARQUES, Pedro Miguel, P-3865-221 Salreu Estarreja (PT); VILELA PONTES, António José, P-4770-313 Landim (PT); VIEIRA RIBEIRO, Igor Alexandre, P-4990-444 Ponte de Lima (PT)
(74) Representative: Ferreira, Maria Silvina
(86) International application number: PCT/PT2012/000023
(87) International publication number: WO 2014/003589

(57) **Abstract**

The present invention provides a solution, which includes and improves adhesion between crumb rubber from end of live tires (crumb rubber from ELT) and the polymer matrix by adding a compatibilizing agent which, in addition to compatibilizing materials, promotes mixture homogeneity thus a material with good mechanical properties and good surface appearance being obtained.

The present invention discloses new material formulations including crumb rubber from ELT in thermoplastic polymer matrices using a compatibilizing agent. From this mixture, products are obtained with crumb rubber from ELT composition having a polymer matrix, using additives to improve the final properties of the composite. The cost is essential to compete with products made from virgin material andso, this process aims at reducing the cost of the product as well as the relative amount of the virgin material used and the reuse of recycled rubber.

## Description

### Field of Invention

The present invention relates to new materials including crumb rubber from ELT, allowing an environmentally advantageous solution to these raw materials without compromising mechanical characteristics. More specifically, the present invention relates to the mixture of crumb rubber from ELT with thermoplastics for the production of a new material.

### Background of the Invention

With the growing number of motor vehicles worldwide, it has become necessary to produce greater amounts of tires to fit them. It is common sense that tires are products achieve their end of live rapidly and that they must be recycled.

During the past two decades, scrap tire recycling has developed at a commercial level. A series of laws and regulations, together with technological progress and new market opportunities boost the recycling industry of scrap tires towards the 21^{st} century. Currently, tires are recycled; rubber, metal and textile fibers can be recovered and used in a wide range of products/applications.

The main product in ELT recycling is crumb rubber. Since the beginning of the 21^{st} Century, this product has been in demand and its main applications have been observed in sports and safety surfaces, road and airport pavements and industry in general. Presently, sports surfaces represent 61% of the market, safety surfaces represent 29%, road surfaces being 6% and special applications being represented by 4%.

Given the previously mentioned market partition, the major challenge is the development of value-added products. This potential clearly depends on the efforts applied onto research of new products and new properties for Innovation in raw materials, their properties and the resulting economic outcomes. The use of crumb rubber from ELT in mixtures with polymer matrices is broadly used in scientific and technological applications, since allowing the production of new materials having good resilient properties by means of simple processing. This market now includes products such as: resilient layers for use in sports surfaces, carpets, flooring, paneling, household tools (catchers), railway crossing blocks, iron, animal rugs, rubber bricks, automobile reduction gears, agricultural applications, among others.

The improvement in tire life performance, along with the enhancement of many features, is advantageously and usefully transferred when ground tire rubber is used as raw material. Various technologies have been disclosed with the use of rubber from tires. US 5733943 on "Street signs and other products and method for making same from used rubber tires", refers to ground tire rubber which is crushed and mixed with a styrene-butadiene copolymer and polypropylene or polyethylene. The mixture is placed under temperatures and pressures to form a moldable material, which is subsequently injected into a mold so as to form a sheet material suitable for polypropylene or polyethylene signs. Alternatively, a molded product is formed from 75% ground tire rubber and 25% styrene-butadiene copolymer, which is combined with polypropylene and virgin rubber, and this combination consists of 25 wt% virgin rubber. Such invention also uses two types of rubber for the purposes of adhesion and compatibility between the rubber particles and the polypropylene matrix and a resin, to be used as matrix, for the production of the road sign.

US 5258222 "Incorporation of rubber tire crumbs and siliceous crystalline grains in construction products", which refers more specifically to a process for recycling tire rubber, comprises the steps of granulating rubber tires to form coarse rubber crumbs, mixing the coarse rubber crumbs with coarse siliceous grains, ranging from 0.4 to 4 mm in diameter, to form a closely packed mixture of coarse particles that are roughly commensurate in size, thoroughly wetting the surfaces of the coarse particles with a polymerizable liquid binder to polymerize the mixture so as to provide a viscous slurry, casting the slurry into a sheet-like configuration, and curing the sheet-like configuration under sufficient heat and for a sufficient time to provide an environmentally compatible product, e.g. a paver or tile for driveways, or a shingle for roof tops, that is characterized by excellent weather, wear and chemical strength. The surface characteristics of the coarse particles of vulcanized rubber and crystalline grains are critical to this invention. It is observed that rubber particle size, in this case rubber crumbs, and the type of compatibilizing additive differ from those proposed in the invention herein disclosed.

The technical paper entitled "Thermoplastic elastomeric composition based on ground rubber tire" refers to a blend of linear low density polyethylene (LLDPE), ground tire rubber (GTR), and ethylene and 1-octene copolymer (POE, commercially available under Engage) with a different 1-octene content (LLDPE/GTR/POE (Engage 8003, 8100, 8480)) that was performed by melt-mixing in a co-rotating twin-screw extruder. The mechanical property results have shown that 50/50 LLDPE/POE blend has thermoplastic-elastomeric properties. The LLDPE/GRT blend shows dramatic decrease on mechanical properties given the small adhesion between polymer phase and tire rubber phase. However, the addition of POE to the blend improves mechanical properties a similar value being obtained to that of 50/50 LLDPE/POE blend, when 50% POE is substituted by GTR. The optimal mechanical properties are achieved with the LLDPE/POE/GTR blend at a 50/25/25 ratio. These results suggest that POE can encapsulate the GTR thus improving the dispersion thereof and also acting as a compatibilizing agent of the LLDPE - GTR interface.

It is noted that both the base polymer and the compatibilizing additive and percentage thereof, and the feeding proportion of ground tire rubber, as well as the addition of an antioxidant, differ from those proposed in the present patent application.

The technical paper entitled "Thermoplastic elastomers based on recycled high-density polyethylene, ethylene-propylene-diene monomer rubber, and ground tire rubber" is an article referring to high-performance thermoplastic elastomers (TPEs), based on recycled high-density polyethylene (HDPEr), Ethylene-Propylene-Diene Monomer Rubber (EPDM), and ground tire rubber treated with bitumen. These elastomers were prepared by using dynamic vulcanization technology, and their mechanical properties as well as other related properties were investigated. Experiments have established that bitumen acts as an effective plasticizer for TPE compounds with ground tire rubber. TPEs containing ground tire rubber, pretreated by bitumen, exhibit thermal behavior similar to that of the HDPEr/EPDM blend in the temperature region up to about 340°C. DSC, SEM, and DMTA results revealed improved adhesion between the particles of ground tire rubber treated by bitumen and the polymer matrix, when compared to that of ground tire rubber particles with polymer matrix. It has been concluded that bitumen acts as a devulcanizing agent in the ground tire rubber treatment stage. In the following steps of TPE production, bitumen acts simultaneously as a curing agent for the rubber components (EPDM/ ground tire rubber) and as a compatibilizing agent for the blend components. TPE compounds with ground tire rubber were prepared by extrusion technology, were reprocessed six times by passing through the extruder, without any observable changes in their tensile properties, thermal stability, and melt viscosity. It has been found that the percentage of incorporation of ground tire rubber and the use of bitumen differ from those proposed in the present invention. Bitumen is used for the treatment of ground tire rubber, this being a process directed for the production of a composite, which is consequently more expensive and associated with all limitations inherent to bitumen, in particular as far as handling and processing properties are concerned. The results obtained from this technical paper with a 25% incorporation of ground tire rubber are substantially similar to the results of the present invention but with a higher percentage of incorporation, except for elongation.

### Summary of the Invention

The objective of the present invention is to disclose composite material from crumb rubber from ELT comprising the following composition:
- 26-80% tire crumb rubber;
- 1-8% compatibilizing agent;
- Remaining percentage of polymer matrix.

In a preferred embodiment of the invention, the composite material from crumb rubber from ELT further includes an anti-odor and/or flavoring additive.

In a further preferred embodiment of the invention, the composite material from crumb rubber from ELT includes an anti-odor additive ranging from 1 to 3% per 100 parts by weight of crumb rubber from ELT and polymer matrix.

In a further preferred embodiment, the composite material from crumb rubber from ELT includes RODO O in liquid form as anti-odor additive.

In a preferred embodiment of the invention, the composite material from crumb rubber from ELT further incorporates a coloring agent.

In a further preferred embodiment of the invention, the composite material from crumb rubber from ELT includes a coloring additive ranging from 5 to 25% per 100 parts by weight of crumb rubber from ELT and polymer matrix.

In a further preferred embodiment, the composite material from crumb rubber from ELT includes the polypropylene, polyethylene or ethylene vinyl acetate (EVA) base matrix masterbatch as coloring additive.

In a preferred embodiment of the invention, the composite material from crumb rubber from ELT includes Ethylene-Propylene-Diene Monomer as compatibilizing agent.

In a further preferred embodiment of the invention, the composite material from crumb rubber from ELT includes a polymer matrix comprising polypropylene (PP) or polyethylene (PE) or thermoplastic elastomers (TPE) or polyesters.

In a further preferred embodiment, the composite material from crumb rubber from ELT comprises the polymer matrix, compatibilizing agent and coloring additive in granule or powder form, the anti-odor additive in liquid form and the crumb rubber from ELT in granule form having a particle size diameter up to 2.5 mm.

### Detailed Description of the Invention

The present invention discloses new material formulations including crumb rubber from ELT in thermoplastic polymer matrices using a compatibilizing agent. From this mixture products are obtained with crumb rubber from ELT composition having a polymer matrix, using additives to improve the final properties of the composite. The cost is essential to compete with products made from virgin material and, as such, this process aims at reducing the cost of the product as well as the relative amount of the virgin material used and the reuse of recycled rubber.

Among the wide range of polymers used to obtain the composites are in particular polypropylene (PP), polyethylene (PE), thermoplastic elastomers (TPE) and polyester (PET, PBT..). These materials were chosen primarily because they allow being processed at temperatures below 240 °C, and are low cost materials.

A polymer is a material which easily deforms when subjected to heat, being able to be molded and once more solidified. Polymers may be fused several times thus being recyclable, which results in a desirable feature in today's world. Polyethylene (PE) is a rigid opaque material with good chemical and high impact strength providing a multitude of applications. Polypropylene (PP) is a low density polymer which provides a good balance between thermal and electrical properties, good chemical strength, good mechanical properties at high temperature, having high impact strength and low cost, which provides a wide range of products.

Thermoplastic elastomers (TPE) are alloys obtained from the addition of a thermoplastic and an elastomer, having various designations depending on the alloy component or on the manufacturing process where it is inserted. Generally, they provide a much wider range of properties than conventional rubbers and thermoplastics, since the composition may vary according to customer needs. TPE have the processability and recyclability from thermoplastics in common, while the contribution of the elastomer is similar to that of a rubber, low hardness and resilient deformation. Polybutylene terephthalate (PBT) is a semicrystalline polymer belonging to the class of polyester, and is used as insulation means in electrical and electronics industry. PBT is mechanically strong, heat resistant up to 150 or (or 200 °C having fiber glass as reinforcement), having a good impact strength, chemical strength, good tensile strength, ease of pigmentation, being capable of forming compositions with other polymers/loads, excellent surface gloss and being able to be incorporated with flame retardant in order to become non-flammable. It is used for electrical engineering boxes, in the automotive industry, in showers and is also used on the surfaces of keys or keyboards due to its mechanical wear resistance.

The crumb rubber from ELT is a thermosetting polymer, which decomposes by heating prior to fusion. The initial experiments established that there is scarce interaction between the surface of the rubber and the polymer matrix.

We have exceeded this difficulty by adding a compatibilizing agent, facilitating incorporation and improving adhesion between the scrap tire crumb rubber and the polymer matrix. The mechanism is based on chemical attack on the polymer chains both in the polymer matrix and in crumb rubber from ELT under the influence of heat. These attacks occur where they are most likely to form active centers, i.e. where there are double or triple bonds. By breaking these connections there is a tendency to the formation of new connections between the matrix, the crumb rubber from ELT and compatibilizing agent, thus a single structure being formed.

Importantly, the type of molecular structure of the compatibilizing agent and molecular weight thereof, as well as the presence of functional groups, plays an important role in the adhesion between polymer matrix surfaces and those of the crumb rubber from ELT. Preferably, we use Ethylene-Propylene-Diene Monomer, EPDM, that has been the element which better promotes interaction/adhesion between the crumb rubber from ELT and the polymer matrix with improved mechanical properties of the final composite.

It has also been an object of the present investigation to determine how to remove the characteristic odor from rubber products as well as the possible way to color the composites thus obtained.

As a solution for adjacent odor reduction, anti-odor and/or flavoring additives are included. The major difficulty in removing the characteristic odor from tire rubber is due to the significant proportion of carbon black used, between 20 to 25%, in the manufacture of the tire which provides it with the characteristic odor. The preferable anti-odor additive is RODO 0 in liquid form. This is because during processing the RODO 0 anti-odor additive associates and interacts with the molten material, thus creating affinity with the polymer matrix composite with crumb rubber from ELT in order to neutralize the characteristic odor of tire rubber.

In certain applications, the coloring of the material obtained may be decisive. It is already known that tire crumb rubber is black. Our approach aimed at finding products which, once embedded in the matrix, would modify it by changing its color. Preferably, we chose polypropylene, polyethylene or ethylene vinyl acetate (EVA) base matrix masterbatches.

As previously mentioned, the final material comprises crumb rubber from scrap tires, thermoplastic polymers and/or polyesters, compatibilizing agent and optionally, if deemed necessary, the addition of the anti-odor and coloring additives depending on the application.

The compositions of polymer matrix and crumb rubber from ELT composites include a range from 26% to 80%, preferably used between 40% - 70% of scrap tire crumb rubber incorporation, and the polymer matrix balance by weight per 100 parts by weight of crumb rubber from ELT and polymer matrix.

The percentage of compatibilizing agent to achieve the desired properties as an ultimate objective ranges between 1 and 8% per 100 parts by weight of crumb rubber from ELT and polymer matrix. By choosing the addition of the anti-odor additive, the percentage required to achieve the desired objective ranges from 1 to 3% per 100 parts by weight of crumb rubber from ELT and polymer matrix. If one decides towards the addition of coloring additives, the percentage required to achieve the desired objective ranges between 5 and 25% per 100 parts by weight of crumb rubber from ELT and polymer matrix.

The crumb rubber from ELT, the polymer matrix, the compatibilizing agent and the coloring additive are in granule or powder form, and the anti-odor additive is used in liquid form. The particle size of crumb rubber from ELT is up to 2.5 mm in diameter, taken that the smaller the particle size, the greater the surface area of the grains, which benefits the bond between the other components of the composition.

In a simple way, we note that four different types of formulations can be obtained which shall be designated:
1. Base formulation (crumb rubber with polymer matrix and compatibilizing agent);
2. Base formulation with anti-odor additive;
3. Base formulation with coloring additive;
4. Base formulation with anti-odor and coloring additives.

The addition of anti-odor and/or coloring additives does not promote changes to the properties observed in base compositions.

In order to check the persistence of the anti-odor and coloring additive effect during reprocessing, all four compositions were tested and no change in the anti-odor and color effect has been observed.

The processing of polymer matrix and crumb rubber from ELT composites is made by extrusion. Preferably, we can use a conventional co-rotating twin-screw extruder. The use of such equipment improves the consistency and quality of the dispersion by reducing the thermal history of the material composition, and it makes the composition of each particle be subject to the same shear rate. The equipment consists of modules thus allowing an optimal configuration of the process. An extrusion line used for this purpose preferably consists of the following modules:
- co-rotating twin-screw extruder;
- Gravimetric dispensers;
- Side feeders;
- Granulator;
- Liquid dispenser;
- Vacuum system;
- Drying system;
- Cooling system.

The essential elements that improve the quality of the composite thus obtained in the co-rotating twin-screw extruder are:
- The ability to provide improved homogeneity of all polymer matrix composites with crumb rubber from ELT;
- The ability to control the temperature to keep the composites obtained under the same processing conditions.

The polymer matrix, the tire crumb rubber, the compatibilizing agent and the coloring additive are added through gravimetric dispensers. By choosing an anti-odor additive, it is added by a liquid dispenser. Materials are added sequentially so as to obtain a better dispersion and homogenization of the composition, this sequence being optimized according to the final properties of the extruded composite.

The polymer matrix, the compatibilizing agent and anti-odor additive are the first components to start processing by entering into the extruder either simultaneously or sequentially. The crumb rubber follows in the sequence, which shall be complete upon the addition of the coloring additive, where applicable.

The extruded composites are cooled and further processed into granules inside a granulator.

### Description of the obtaining method

The present invention aims at providing a new material comprising the incorporation of a compatibilizing additive suitable for the production of polymer-based composites with crumb rubber from ELT. The incorporation percentage of crumb rubber from ELT in the composition intended to be extruded will depend on economic factors, on the process and its applicability. The compositions of polymer matrix composites with crumb rubber from ELT to be extruded will include a range between 26% and 80%, preferably used between 40% - 70% incorporation of crumb rubber from scrap tires, and the polymer matrix weight balance per 100 parts by weight of crumb rubber from ELT and polymer matrix. The compatibilizing additive percentage required to achieve the desired properties as an ultimate objective may range between 1 and 8% per 100 parts by weight of crumb rubber from ELT and polymer matrix. If one decides towards the addition of the anti-odor additive, the percentage required ranges from 1 to 3% per 100 parts by weight of crumb rubber from ELT and polymer matrix. If one decides towards the addition of coloring additives, the percentage required to achieve the desired objective ranges between 5 and 25% per 100 parts by weight of crumb rubber from ELT and polymer matrix.

The present invention is illustrated with reference to the following examples, which will assist a better understanding thereof and which should not be understood as limitations thereof. All percentages described, unless otherwise specified, are by weight (mass). All temperatures are expressed in degrees Celsius, and processing the composites is undertaken at a temperature range between 165 and 240 °C.

### EXAMPLE I

The composite with 52.5% incorporation of crumb rubber from ELT in a polymer matrix is obtained from the initial composition indicated in table 1.

**Table 1: Composition of the composite with 52.5% incorporation of crumb rubber from ELT by parts of rubber.**

| **Components** | **Percentage (%)** |
|---|---|
| crumb rubber from ELT | 52.5 |
| Polymer matrixes (PE,PP,TPE,PBT) | 42.5 |
| Compatibilizing additive (EPDM) | 4 |
| Anti-odor additive (RODO O) | 1 |

The components are housed within their respective dispensers, all being at room temperature.

The polymer matrix, compatibilizing agent and anti-odor liquid dispensers are calibrated, and are subsequently coupled to the extruder. Before adding the crumb rubber from ELT, these components are carried by the twin-spindle co-rotating screw at a speed of 280 rpm, being submitted to a softening and plasticizing process. The crumb rubber from ELT dispenser feeds the crumb rubber at a speed of 250 rpm, contacting the rest of the compound previously added and being subjected to a mixing, plasticizing, pressurizing, homogenizing process thus forming the final composite, and being subsequently extruded.

The entire process is held under vacuum, so as to ensure that moisture, as well as gases from the reaction, do not interfere with the quality of the composite thus obtained. Subsequently the extruded composite is cooled, and then granulated.

### EXAMPLE II

The difference between this example and Example I is the increased incorporation of scrap tire crumb rubber and anti-odor additive, and reduced incorporation of polymer matrix and compatibilizing agent, as shown in Table 2.

**Table 2: Composite composition with 62.5% incorporation of crumb rubber from ELT by parts of rubber.**

| **Components** | **Percentage (%)** |
|---|---|
| Scrap tire crumb rubber | 62.5 |
| Polymer matrixes (PE,PP,TPE,PBT) | 32.5 |
| Compatibilizing additive (EPDM) | 3 |
| Anti-odor additive (RODO O) | 2 |

The processing of this composite is undertaken similarly to that used in Example I, following the same sequence and using the same equipment and material.

### EXAMPLE III

In this example, the composite comprises 70% scrap tire crumb rubber, as shown in table 3, thus providing a final composite, which is more flexible than the remainder composites.

**Table 3: Composition of the composite with 70% incorporation of crumb rubber from ELT by parts of rubber.**

| **Components** | **Percentage (%)** |
|---|---|
| Crumb rubber from ELT | 70 |
| Polymer matrixes (PE,PP,TPE,PBT) | 20 |
| Compatibilizing additive (EPDM) | 7 |
| Anti-odor additive (RODO 0) | 3 |

The processing of this composite is undertaken similarly to that used in Example I, following the same sequence and using the same equipment and material.

### EXAMPLE IV

This composite comprises 35% scrap tire crumb rubber and 45% polymer matrix, as shown in table 4, thus providing a composite, which is harder than the remainder composites.

**Table 4: Composition of the composite with 35% incorporation of crumb rubber from ELT by parts of rubber.**

| **Components** | **Percentage (%)** |
|---|---|
| Crumb rubber from ELT | 35 |
| Polymer matrixes (PE,PP,TPE,PBT) | 45 |
| Compatibilizing additive (EPDM) | 6 |
| Anti-odor additive (RODO O) | 2 |
| Coloring additive (EVA,PP,PE) | 12 |

The processing of this composite is undertaken similarly to that used in Example I, following the same sequence and using the same equipment and material, a further gravimetric dispenser being added for coloring additive feeding purposes.

### EXAMPLE V

This example is different from all other examples since the composition lacks both anti-odor and coloring additives. This composite with 57.5% incorporation of crumb rubber from ELT in a polymer matrix is as shown in table 5.

**Table 5: Composition of the composite with 57.5% incorporation of crumb rubber from ELT by parts of rubber.**

| **Components** | **Percentage (%)** |
|---|---|
| Crumb rubber from ELT | 57.5 |
| Polymer matrixes (PE,PP,TPE,PBT) | 37.5 |
| Compatibilizing additive (EPDM) | 5 |

The processing of this component is undertaken similarly to that used in Example I, following the same sequence (except for the anti-odor additive) and using the same equipment and material.

The following claims further highlight particular embodiments of the invention.

## Claims

1. Composite material from crumb rubber from ELT **comprising** the following composition:
- 26-80% tire crumb rubber;
- 1-8% compatibilizing agent;
- Remaining percentage of polymer matrix.

2. Composite material from crumb rubber from ELT according to claim 1, **wherein** incorporation is also made of an anti-odor and/or flavoring additive.

3. Composite material from crumb rubber from ELT according to the previous claims, **wherein** the anti-odor additive ranges from 1 to 3% per 100 parts by weight of crumb rubber from ELT and polymer matrix.

4. Composite material from crumb rubber from ELT according to the previous claims, **wherein** the anti-odor additive used is RODO 0 in liquid form.

5. Composite material from crumb rubber from ELT according to the previous claims, **wherein** further incorporation is made of a coloring agent.

6. Composite material from crumb rubber from ELT according to the previous claims, **wherein** the coloring additive ranges from 5 to 25% per 100 parts by weight of crumb rubber from ELT and polymer matrix.

7. Composite material from crumb rubber from ELT according to the previous claims, **wherein** the coloring additive is a polypropylene, polyethylene or ethylene vinyl acetate (EVA) base matrix masterbatch.

8. Composite material from crumb rubber from ELT according to the previous claims, **wherein** the compatibilizing agent is Ethylene-Propylene-Diene Monomer.

9. Composite material from crumb rubber from ELT according to the previous claims, **wherein** the polymer matrix comprises polypropylene (PP) or polyethylene (PE) or thermoplastic elastomers (TPE) or polyesters.

10. Composite material from crumb rubber from ELT according to the previous claims, **wherein** the polymer matrix, the compatibilizing agent and the coloring additive are in granule or powder form, the anti-odor additive is in liquid form and the crumb rubber from ELT is in granule form having a particle size diameter up to 2.5 mm.
